# EUROPEAN PATENT APPLICATION

(11) **EP 2 857 986 A1**
(43) Date of publication of application: **08.04.2015**
(21) Application number: 12877979.0
(22) Date of filing: 31.05.2012
(51) Int. Cl.: G06F 17/30

(54) **INDEX GENERATING PROGRAM AND SEARCH PROGRAM**

(71) Applicant: Fujitsu Limited, Kawasaki-shi, Kanagawa 211-8588 (JP)
(72) Inventor: KATAOKA, Masahiro, Kawasaki-shi Kanagawa 211-8588 (JP); MURATA, Takahiro, Kawasaki-shi Kanagawa 211-8588 (JP); OHTA, Takafumi, Kawasaki-shi Kanagawa 211-8588 (JP)
(74) Representative: Hoffmann Eitle
(86) International application number: PCT/JP2012/003592
(87) International publication number: WO 2013/179348

(57) **Abstract**

[Problem to be solved] It is an object in one aspect of an embodiment of the invention to suppress narrow down noise generated when targets are narrowed down at the time of a string search performed on document data.

[Solution] According to an aspect of an embodiment, a computer changes, in accordance with whether a document element that has a predetermined number of child elements is present in a document file, control of determining whether data in the document file is to be included in which of a plurality of blocks by changing the control between the control performed for each document element in the hierarchy of the child elements and the control performed for each document element in the hierarchy of the document element or in the hierarchy higher than the hierarchy of the document element; divides the document file into the plurality of blocks; and generates, for each piece of data obtained by being divided, index information that indicates whether each of the pieces of the data includes predetermined character information.

## Description

### [Technical Field]

The embodiment discussed herein is directed to a technology for searching document data.

### Background

### [Background Art]

Books in various genres, such as novels, academic books, dictionaries, or the like, are sold in the form of electronic books in which information is electronically stored. When a plurality of pieces of document data are searched, there is a technology of using index information that indicates the association relation indicating, for each type of character information, that character information is included which of the plurality of pieces of document data. For example, control is performed such that, by using previously generated index information, document data indicating that character information C in a search string is included is used as the search target for a string search that is performed based on the search string, whereas another piece of the document data is excluded from the target for the string search. This is because the index information indicates that the character information C is not included in the other document data, it is obvious that the search string is not included in the other document data without performing the string search on the search string.

Furthermore, there is also a known technology of using index information as a bit string in which bits indicating that character information is present in which of document elements (in units of chapters, sections, paragraphs, or the like) in a file are allocated in units of document elements (for example, Patent Document 1).

### [Citation List]

### [Patent Citation]

Patent Document 1: Japanese Laid-open Patent Publication No. 08-314966

### [Summary of Invention]

### [Technical Problem]

Electronic books, such as novels, academic books, dictionaries, or the like, are described in, for example, a markup language, such as HyperText Markup Language (HTML). Document data described in HTML is divided, by using tag information or the like in the document data, into document elements that forms the document. For example, for a certain tag, data from the start tag to the end tag is a single document element. For a certain document element, data from the other start tag to the other end tag included in the document element corresponds to a child element of the document element described above. In this way, the hierarchical relation between the document elements is indicated in accordance with the inclusion relation that indicates the combinations of the start tags and the end tags.

However, even if a file of the document data is divided into blocks for each document element, in a certain hierarchy, that is included in the file, the data size of each of the obtained divided blocks is not always the same. If the data size varies in each block, the number of the types of character information included in each block tends to vary. For example, in an academic books arranged into chapters, when only a certain chapter is long, the number of types of character information becomes great only in the block associated with that chapter. In such a case, in index information, a significantly large number of types of character information is present in a specific block.

Furthermore, there is a technology that uses compressed index information; however, for a block in which many types of character information is present, when a search refinement using index information is performed on the target string search, noise tends to be generated due to compression of the index information. The compressed index information mentioned here is index information in which, for a plurality of pieces of character information, pieces of association relation information indicating that character information is included which of the plurality of pieces of document data are superimposed. Namely, in the compressed index information, information that indicates which of the plurality of pieces of the character information is included is associated with each block. Then, because pieces of presence/absence information indicating whether the plurality of pieces of the character information are present are superimposed, the data size of the index information itself is suppressed. In contrast, when files are narrowed down, because another piece of character information that is superimposed and that is stored in the index information is also extracted from the index information, narrow down noise is generated. If the compression rate is made to increase, i.e., if the number of pieces of character information to be superimposed is made to increase, there is a high possibility that noise is generated, i.e., narrow down noise tends to be generated. However, because the number of types of the character information included in a block differs for each block, even if the compression rate is the same in the blocks, the possibility of noise being generated varies for each block. Consequently, narrow down noise tends to be generated in a block in which the number of types of character information is great.

As described above, even if data in a file is divided into blocks at the boundary of a document element in a specific hierarchy, because the data size of each document element varies, the ease of generation of narrow down noise varies in each block.

However, if the file of the document data is divided such that the data size of the block is simply uniform, the file may sometimes be divided at the boundary other than the boundary of a document element or at the boundary of a document element (the headline of a document arranged into items, such as part, a chapter, a section, an item, or the like) in a lower level.

For example, it is assumed that a file corresponding to a first chapter is divided into a first block that includes therein a first section and a part of a second section and a second block that includes therein a part of the second section and a third section. For example, in academic books, paragraphs included in the same section often have the content related to both the paragraphs. Accordingly, the character information included in terms that are specific to each paragraph in the second section is sometimes present in both the first block and the second block. In such a case, if a file is divided into blocks at the boundary of sections (for example, divided into the first block, the second block, and the third block, at the first section, the second section, and the third section, respectively), the character information included in a term that is specific to the second section is possibly present only in the second block (a case in which the specific term is not present in both the first section and the third section).

In documents, such as academic books, that have the hierarchical structure, a term that is commonly used in each section in a chapter, a term that is commonly used in each paragraph in a section, and a term that is commonly used in each item in a paragraph tend to be present.

In contrast, in dictionaries, because the content is separated in each item, paragraphs that are included in the same section are less likely to have the content relating to the paragraphs. Accordingly, even if a term is specific to a certain paragraph in the second section, the term may not be used in the other paragraph in the second section. Even if a file is divided into the first block that includes therein the first section and a part of the second section and the second block that includes therein a part of the second section and the third section, there may sometimes be a case in which the character information that is included in a term that is specific to a certain paragraph in the second section described above is only included in the first block or the second block.

As described above, as in academic books, by including, in the same block, child elements that have related content and that are included in the same element at a higher level, suppression of narrow down noise of the target string search is expected. In contrast, as in dictionaries, even if child elements that are included in the same elements at a higher level (for example, a chapter, etc.) are made to include in the same block, there may be a case in which narrow down noise is less likely to be suppressed. In such a case, by leveling the data size of each block, suppression of narrow down noise may sometimes be expected.

Accordingly, it is an object in one aspect of an embodiment of the invention to suppress narrow down noise generated when targets are narrowed down at the time of a string search performed on document data.

### [Solution to Problem]

According to one aspect, a generating program causes a computer to execute a process including: changing, in accordance with whether a document element that has a predetermined number or more of child elements is present in a document file, control of determining whether data in the document file is to be included in which of a plurality of blocks by changing the control between the control performed for each document element in a hierarchy of the child elements and the control performed for each document element in the hierarchy of the document element or in the hierarchy higher than the hierarchy of the document element; dividing, by using the control in accordance with the change at the changing, the document file into the plurality of blocks; and generating, for each block obtained by being divided at the dividing, index information indicating whether each of the blocks includes predetermined character information.

According to one aspect, a generating method is used, the generating method including: changing, performed by a computer in accordance with whether a document element that has a predetermined number or more of child elements is present in a document file, control of determining whether data in the document file is to be included in which of a plurality of blocks by changing the control between the control performed for each document element in a hierarchy of the child elements and the control performed for each document element in the hierarchy of the document element or in the hierarchy higher than the hierarchy of the document element; dividing, performed by the computer by using the control in accordance with the change at the changing, the document file into the plurality of blocks; and generating, performed by the computer for each block obtained by being divided at the dividing, index information indicating whether each of the blocks includes predetermined character information.

According to one aspect, a generating apparatus includes: a dividing unit configured to change, in accordance with whether a document element that has a predetermined number or more of child elements is present in a document file, control of determining whether data in the document file is to be included in which of a plurality of blocks by changing the control between the control performed for each document element in a hierarchy of the child elements and the control performed for each document element in the hierarchy of the document element or in the hierarchy higher than the hierarchy of the document element and that divides, by using the control in accordance with the change, the document file into the plurality of blocks; and a generating unit configured to generate, for each block obtained by being divided, index information indicating whether each of the blocks includes predetermined character information.

According to one aspect, a search program causes a computer to execute a process including: referring to, when a search string is received, based on character information included in the search string, index information indicating, in an associated manner, whether each block includes the character information, each of the blocks being obtained by being divided by changing, in accordance with whether a document element that has a predetermined number or more of child elements is present in a document file, control of determining whether data in the document file is to be included in which of the blocks by changing the control between the control performed for each document element in a hierarchy of the child elements and the control performed for each document element in the hierarchy of the document element or in the hierarchy higher than the hierarchy of the document element; specifying, by referring to the index information at the referring, the block that indicates that the character information is included in the index information; and performing a string search on the search string with respect to the specified block.

According to one aspect, a search method is used, the search method including: referring to, performed by a computer when a search string is received, based on character information included in the search string, index information indicating, in an associated manner, whether each block includes the character information, each of the blocks being obtained by being divided by changing, in accordance with whether a document element that has a predetermined number or more of child elements is present in a document file, control of determining whether data in the document file is to be included in which of the blocks by changing the control between the control performed for each document element in a hierarchy of the child elements and the control performed for each document element in the hierarchy of the document element or in the hierarchy higher than the hierarchy of the document element; specifying, performed by the computer by referring to the index information at the referring, the block that indicates that the character information is included in the index information; and performing, by the computer, a string search on the search string with respect to the specified block.

According to one aspect, a search apparatus includes: a receiving unit configured to receive a search string; a storing unit configured to store therein, based on character information included in the search string received by the receiving unit, index information indicating, in an associated manner, whether each block includes the character information, each of the blocks being obtained by being divided by changing, in accordance with whether a document element that has a predetermined number or more of child elements is present in a document file, control of determining whether data in the document file is to be included in which of the blocks by changing the control between the control performed for each document element in a hierarchy of the child elements and the control performed for each document element in the hierarchy of the document element or in the hierarchy higher than the hierarchy of the document element; a narrow down unit configured to specify, by referring to the index information stored in the storing unit, the block that indicates that the character information is included in the index information; and a searching unit configured to perform a string search on the search string with respect to the specified block.

### [Advantageous Effects of Invention]

According to an aspect of an embodiment of the present invention, an advantage is provided in that it is possible to suppress narrow down noise when targets are narrowed down at the time of a string search performed on document data.

### [Brief Description of Drawings]

FIGS. 1A and 1B are schematic diagrams each illustrating an example of index information and an example of a bit string that is generated based on the index information.
FIG. 2A is a schematic diagram illustrating an example of the hierarchical structure of document data.
FIG. 2B is a schematic diagram illustrating an example of the hierarchical structure of document data.
FIG. 3 is an example function block diagram of a computer 1.
FIG. 4 is an example function block diagram of a generating unit 13.
FIG. 5 is a schematic diagram illustrating an example of the association relation between a block number and the reading position of a block.
FIG. 6 is an example function block diagram of a narrow down unit 15.
FIG. 7 is a schematic diagram illustrating an example of the hardware configuration of the computer 1.
FIG. 8 is a schematic diagram illustrating a configuration example of the software running on the computer 1.
FIG. 9 is an example flowchart illustrating the flow of a process of generating an index.
FIG. 10A is an example flowchart illustrating the flow of a document structure analysis process.
FIG. 10B is an example flowchart illustrating the flow of a document structure analysis process.
FIG. 11 is a schematic diagram illustrating an example of a document structure table.
FIG. 12A is an example flowchart illustrating the flow of a file dividing process.
FIG. 12B is an example flowchart illustrating the flow of a file dividing process.
FIG. 13 is an example flowchart illustrating the flow of a full text search process.
FIG. 14 is an example flowchart illustrating the flow of an index referring process.
FIG. 15 is a schematic diagram illustrating an example of a table that stores therein search results.

### [Embodiments for Carrying Out the Invention]

Before a description will be given in detail, a process of narrowing down files that are targeted for a string search performed by using index information will be described.

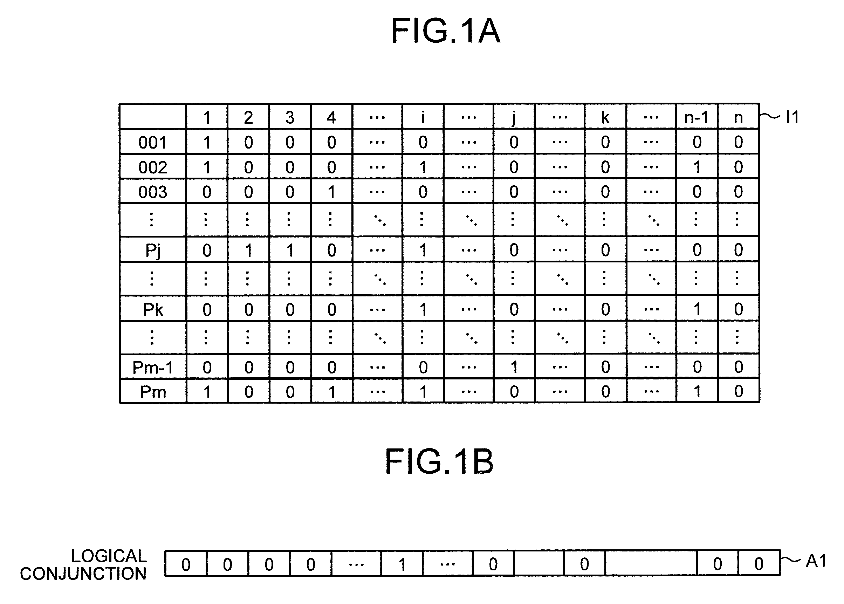

FIG. 1A is a schematic diagram illustrating an example of index information I1 based on file groups F1 to Fn that are targeted for a search. The file number indicated in the top row in the index information I1 is associated with each of the file groups F1 to Fn that are targeted for the search. In the index information, each of character information groups C1 to Cm is associated with a bit string related to whether each of the file groups F1 to Fn is present.

Character information Cj included in the character information groups C1 to Cm is a character string of, for example, a single character or a combination of a plurality of characters. Alternatively, the character information Cj may also be a part of a binary code that is associated with the character information. The character information groups C1 to Cm may also be all of the combinations of characters that are supposed to be used (for example, a character to which the JIS code is allocated). For example, it is assumed that a file Fi (file number is i) in the file groups F1 to Fn is a file that includes the character string represented by "jin-sei ha kurozu-appu de mire-ba hi-geki rongu-shotto de mire-ba kigeki". In this case, the file Fi is also a file that includes therein the character information represented by "jin", "sei", "ha", ..., and "geki" and a file that includes therein the character information represented by "jin-sei", "sei ha", "ha ku", ..., and "kigeki". In the embodiment, a description will be given of a case in which each of the character information groups C1 to Cm is character information representing two characters.

Information indicating that the character information Cj is included which of the file groups F1 to Fn is indicated by storing information, which indicates whether the character information Cj is stored in the file Fi, in a storage area in which the character information Cj is associated with the file Fi with the file number i that indicates one of 1 to n. For example, in index information I1, the storage in which presence/absence information indicating whether the character information Cj is stored in the file Fi is indicated by an address Pj that is obtained by substituting the binary code associated with the character information Cj into the hash function and is indicated by the file number i. For example, if a binary code (a character code based on JIS) associated with the character information represented by "kigeki" is used, the binary code associated with the character information mentioned here is 0x346E3760 (0x indicates the hexadecimal notation).

When a single address Pj is allocated to a single piece of the character information Cj, if the character information Cj is present in the file Fi, the presence/absence information on the character information Cj is indicated by a bit value of "1" and, if the character information Cj is not present in the file Fi, the presence/absence information is indicated by a bit value of "0". In contrast, there may also be a case in which a plurality of pieces of character information (for example, the character information Cj and character information Ck) are allocated to the single address Pj. In such a case, if at least one of the character information Cj and the character information Ck is present in the file Fi, the presence/absence information is indicated by the bit value of "1" and, if both the character information Cj and character information Ck are not present in the file Fi, the presence/absence information is indicated by the bit value of "0". Furthermore, the way of displaying the presence/absence information may also be appropriately changed. For example, an absence may also be indicated by the value of "1" and a presence may also be indicated by the value of "0". Furthermore, the presence or the absence may also be indicated by a plurality of bits. In the index information illustrated in FIG. 1A, the bit with the value of "1" indicates that the character information is included.

For example, if the character information associated with the address Pj is only "kigeki", it is clear, from the bit string indicated by the address Pj in the index information I1, that "kigeki" is included in each of the files with the file number of 2, 3, and i. Furthermore, for example, if both "geki-o" and "mire" are associated with the single address Pk, the bit string indicated by the address Pk in the index information I1 indicates, for each of the file groups F1 to Fn, that at least one of "geki-o" and " mire" is included or indicates, for each of the file groups F1 to Fn, that neither of "geki-o" and "mire" are included. For example, it is indicated that the files with the file number of i and n-1 include at least one of "geki-o" and "mire", whereas it is indicated that the files with the file number of 1, 2, 3, j, k, and the like do not include neither of "geki-o" and "mire".

As illustrated in FIG. 1A, because the file Fi includes character information other than "kigeki", in addition to "kigeki", the bits, such as "jin-sei", "sei ha", ..., or the like, that are located at the positions associated with the other pieces of the character information in the search string also indicate the value of "1". Furthermore, although not illustrated in FIG. 1A, for each of the file groups F1 to Fn, bits at the positions that are associated with the pieces of the character information included in each of the files also indicate the value of "1".

When the searching is performed on the file groups F1 to Fn, narrowing down of the files that are targeted for a string search is performed by using the index information I1 illustrated in FIG. 1A. For example, it is assumed that a search request that includes therein a search string represented by "kigeki-o" is received. In "kigeki-o" in the search string, the character information indicating "kigeki" and the character information indicating "geki-o" are included. In such a case, the file targeted for the string search is narrowed down by using, for example, the bit string indicated by the address (Pj in FIG. 1A) that is calculated based on "kigeki" and the bit string calculated by the address (Pk in FIG. 1A) that is calculated based on "geki-o". For example, the bit string A1 that is the result of the AND operation of the bit string associated with the address Pj and the bit string associated with the address Pk becomes the diagram illustrated in FIG. 1B.

In a bit string A1 illustrated in FIG. 1B, the file associated with the bit of "1" (in FIG. 1B, the file with the file number i) becomes the file that is targeted for the string search. In the example illustrated in FIG. 1A, a plurality of pieces of character information (for example, "mire" and "geki-o") are associated with the address Pk. The file Fi does not include "geki-o" but includes "mire". Accordingly, bits in the file Fi in the bit string that is associated with the pointer Pk that is associated with "mire" and "geki-o" also become "1". When narrowing down the search target files by using the index information I1 and using the character information indicating "kigeki" and the character information indicating "geki-o", even though "geki-o" is not included in the file Fi, the file Fi is determined to be the file that includes therein both "kigeki" and "geki-o" and becomes a search target file.

The same applies to a case of using a half size of character. For example, it is assumed that the file Fi includes a character string indicating "Life is a tragedy when seen in close-up, but a comedy in long-shot". Then, for example, in the index information, the bit that is located at the address Pj, which is calculated based on the character information "come", and that is located at the location indicated by the file number i are represented by "1". Furthermore, for example, the bit that is located at the address Pk, which is calculated based on the character information "medy", and that is located at the location indicated by the file number i are represented by "1". It is assumed that, if a search string is "comedian", for example, based on the index information, search target files are narrowed down to a file that includes therein both "come" and "dian". At this point, if the address that happened to have been calculated based on the character information "dian" corresponds to the address Pk that has been calculated based on the character information "medy", the file Fi becomes the search target file for "comedian" even though the file Fi does not include "dian".

As described above, noise may possibly be generated when files are narrowed down because addresses that are associated with a plurality of pieces of different character information are overlapped. This is because pointers that indicate each of the locations in which the presence/absence information is stored are overlapped between the character information ("geki-o", "dian", etc.) that is not included in the file Fi and the character information ("mire", "medy", etc.) that is included in the file Fi. Because the character information ("mire", "medy", etc.) included in the file Fi is present, the state of the bit becomes "1"; therefore, information indicating the absence of the character information ("geki-o", "dian", etc.) that is not included in the file Fi is not indicated in the index information. Furthermore, if the associated pointer does not include the plurality of pieces of overlapped character information, the state of the bit enters "0"; therefore, it becomes clear that both the index information and the plurality of pieces of the character information are not present.

Namely, the possibility that narrow down noise is generated increases as the pointer of the character information that is included in a file and the pointer of the character information that is not included in the file tend to be overlapped with each other. Here, taking the example of electronic books, such as academic books, when compared with a file of the main program, a file of an index or a table of contents tends to include a greater number of character types and, even if files are included in the same electronic book, the number of types of character information included in the files sometimes differs. Furthermore, even if files are used in the main program, the type of character information included in the file differs between a file with a large data size and a file with a small data size. For files having different number of types of the character information that is included in the files, a case in which an absence of character information is not indicated due to the overlap of addresses tends to occur in one of the files (the number of types of character in the file is large) compared with the other one of the files (the number of types of character in the file is small). The same feature is found not only in the academic books but also in newly published books or the like.

Due to the above described reason, if the index information in the file groups F1 to Fn becomes a sparse matrix as a whole, in the file that includes therein many types of character information, narrow down noise tends to be generated due to the overlap of the pointers of the pieces of the character information. As described above, an example of a file that includes therein many character types includes a file whose file size is greater than that of the other file. If a file with the large file size enters the narrow down noise state, an amount of an unwanted string search process becomes greater than that performed on the other file.

Regarding the index information, it may also possible to associate, for each block obtained by dividing a file instead of using a unit of file, information indicating whether the character information is included. By doing so, the amount of data that becomes the narrow down noise and that is to be read when a string search is performed can be suppressed.

However, the document structure may sometimes become large depending on document data. For example, dictionaries have the document structure in which specific hierarchical document elements (for example, document elements associated with sections, paragraphs, or the like) are listed. In such a case, each of the document elements has individual semantic content and, for example, there may be a case in which a common term is not included in the adjacent document elements (many uncommon terms are included). In contrast, academic books or the like have the document structure in which document elements have the hierarchical relation. A common term tends to be used in child elements each having the common parent element. Furthermore, for example, novels or the like tend to have a single hierarchy and the number of document elements tends to be small. In novels, a common term tends to be used throughout the main part.

As described above, in dictionaries or the like, a list of specific document elements tends to be included. The list of the document elements mentioned here is often used in a case in which information on individual separate events are represented by a certain common form. For example, the form of dictionaries has a common form in which a word is associated with each of the items and each of the listed items is a word and the information (a meaning, a usage, etc.) related to the word. In this case, for example, the child elements that use the word group of the character starting from "a" as the parent element are "ashika", "ashigara-yama", or the like.

For example, it is assumed that index information is generated by associating, for each block obtained by dividing a file, information indicating whether character information is included. As described above, in the document structure that includes the list of document elements used in, for example, dictionaries, a common term is not always included in child elements.

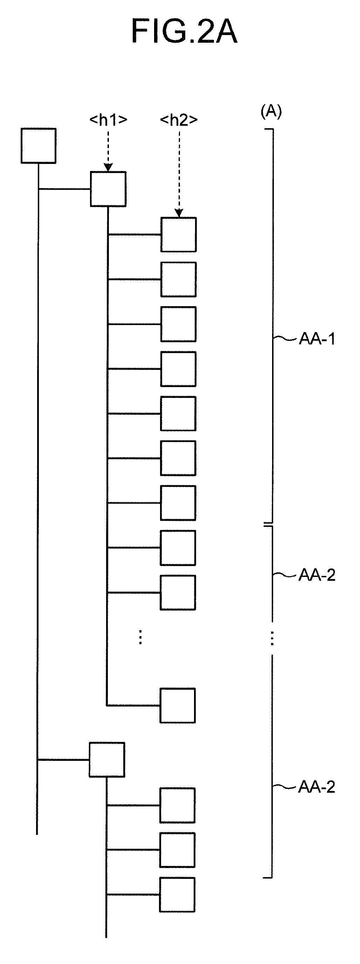

FIG. 2A is a schematic diagram illustrating an example of the hierarchical structure of document data described in a markup language, such as HyperText Markup Language (HTML). If it is assumed that the relation between the tag <body> and the keyword tag, such as a tag <h1> or a tag <h2>, of a certain file is the diagram illustrated in FIG. 2A, many child elements that have a common parent element that can be identified by the tag <h1> are included. In this case, as described above, the degree of commonalities among child elements (elements identified by the tag <h2>) that uses the first tag <h1> as the parent element is low. Accordingly, the division needs to be performed in units of child elements that can be identified by the tag <h2> without attempting to perform the division in units of parent elements that can be identified by the tag <h1>. For example, as indicated by (A) illustrated in FIG. 2A, the division can be performed such that a block AA-1 and a block AA-2 are obtained.

In contrast, in academic books or the like, as described above, common terms tend to be included in child elements that have a common parent element. For example, if it is assumed that there is a document in which a study related to Chaplin is described, words, such as "movie" and "comedy", are of course included in the whole document. In contrast, in the part (chapter, section, paragraph, etc.) in which the feature of a movie is described, words, such as "appearance", "style", and "story", or words representing ideas are used and, in the part in which his life is described, words, such as "marriage" and "immigration", tend to be used. The part in which the feature of the movie is described is also divided into, for example, the part in which the role is described and the part in which the feature of the music is described. Furthermore, the part in which his life is described is also divided into, for example, the part in which his early background and the part in which a scandal is described.

For example, it is assumed that, due to block division, a block that includes, in the part in which the feature of the movie is described (parent element 1), the part in which the musical feature is described (child element 1-2) and the part in which his life is described (parent element 2) is obtained. For this block, words, such as "appearance", "style", and "story", or words representing ideas that are characteristics of the parent element 1 and words, such as "marriage" and "immigration", that are characteristics of the parent element 2 tend to be included in the child element 1-2. For example, if string search target files are narrowed down based on the index information that is associated with blocks divided in this way described above, both the parent element 1 and the parent element 2 are also narrowed down for the search string of "style".

In contrast, if a single block is used for the parent element 1 and a single block is used for the parent element 2, the words, such as "marriage" or "immigration", that are characteristics of the parent element 2 may not be included in the block of the parent element 1 and the words, such as "appearance", "style", or "story", that are characteristics of the parent element 1 may not be included in the block of the parent element 2. If the block of the parent element 2 does not include the words that are characteristics of the parent element 1, when the string search targets are narrowed down by using the search string of "style", the block of the parent element 2 can be prevented from being narrowed down.

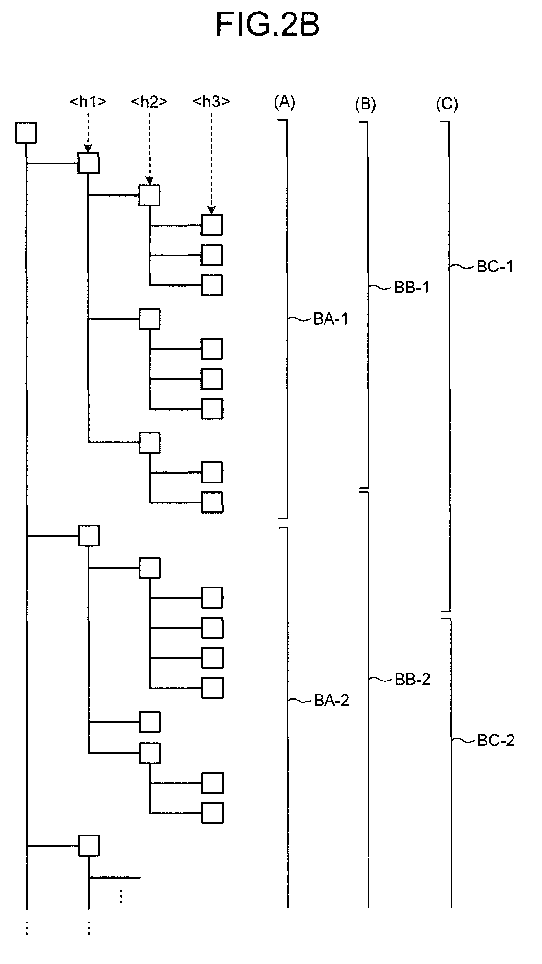

FIG. 2B is a schematic diagram illustrating an example of the hierarchical structure of document data. The symbols indicated by (A), (B), and (C) illustrated in FIG. 2B indicate an example of dividing the file into blocks. In division example (A), the division is performed in units of hierarchical elements that are associated with the tag <h1> and, consequently, a block BA-1 and a block BA-2 are obtained. In division example (B), the division is performed in units of hierarchical elements that are associated with a tag <h3> and, consequently, a block BB-1 and a block BB-2 are obtained. In division example (C), the division is performed in units of hierarchical elements that are associated with the tag <h3> and, consequently, a block BC-1 and a block BC-2 are obtained. When the division is performed in a manner indicated by the division example (B), if a feature term is included in a search string in a first element out of the elements that are identified by the tag <h1>, some of the child elements of that element are also included in the block BB-2; therefore, the block BB-2 also becomes targeted for the string search. Similarly, when the division is performed in a manner indicated by the division example (C), if a feature term is included in a first element, in a search string, of the elements that are identified by the tag <h1>, the block BC-1 also becomes targeted for the string search.

As described above, if block division is performed when index information is generated, excluding blocks with large data size and dividing, in units of higher hierarchy levels, document data that has a part of the document structure contribute to efficiently narrow down the string search targets. Namely, by controlling the priority of the determination reference that is used to determine the division position of blocks in accordance with the document structure, noise generated due to a narrow down of a file by using the generated index information is suppressed.

In the document structure, such as novels, that has only a single parent element that includes therein a plurality of child elements, even if the block division is performed, there may be a case in which a common word is used among the divided blocks. However, by performing the block division, even if a word that is not common between blocks, it is possible to suppress the amount of information that is read when a string search is performed.

The hierarchical structure of the document data illustrated in FIG. 2A has been used as an example in which the predetermined number or more child elements are present in a single element. For example, in Kojien in the 5^{th} edition (1998), the number of words starting from "shi" as the first character is 15,921 and the number of words starting from "ka" as the first character is 13,895. Furthermore, although the number of words starting from "Nu", "Ru", "Wo", "N", or the like as the first character is small, the number of words starting from "Nu" as the first character is 662, the number of words starting from "Ru" as the first character is 444, the number of words starting from "Wo" as the first character is 6, and the number of words starting from "N" as the first character is 8. If the number of words starting from "Wo" and "N" are excluded, 444 or more child elements are present in each of the first characters that are used as the parent element.

In contrast, for example, in Hadoop in the 2^{nd} edition (Tom White, 2011), in chapters 12 and 15, the number of sections that are present is only up to section 8. In this example, the number of child elements with respect to a single parent element is equal to or less than eight.

In a case of the example described above, the predetermined number that is used to determine the document structure may also be, for example, "10" or "100". When the predetermined number is "10", if 10 or more child elements are present in a single element, control is performed such that the block division is performed in the hierarchy of these child elements.

Similarly, the difference between the hierarchical structures is also present in a database. In a database, index information indicating whether each piece of character information is present is also used for a search performed in units of records or in units of pages. Instead of in units of records or pages, index information indicating whether each piece of character information is present may also be used for a search performed in units of blocks that are divided such that a plurality of records or a plurality of pages are included.

In a database, similarly to electronic books, the feature is present in the hierarchical structure. In a database in which pieces of management information or log information are accumulated, because a record that is a record of each event is sequentially added, pieces of data are listed in units of records. In contrast, if the pattern of data to be recorded is changed depending on each event, information needed for each of the records of the events differs.

For example, in a database related to customer information, information that is associated with items, such as the ID, the company name, the department, the person in charge, the address, the telephone number, or the like, is stored for each customer. This type of database has the format in which records corresponding to pieces of customer information are listed and has the similar hierarchical structure as that used in dictionaries in electronic dictionaries.

For example, in a database that stores therein clinical testing data on a manufactured medicine, history information on administration is stored for each administration. In the history information, a record including information, such as the administration time, the administered medicine, the state of the subject (body temperature, etc.), the symptom of an adverse reaction, or the like is created. However, the data structure differs depending on the subject such that, in accordance with the feature of the subject (the disease infected by the subject), an item that stores therein information indicating the state of the subject is provided or an item that stores therein information related to an adverse reaction is provided. In this way, because the hierarchy is determined in accordance with the feature of the event, academic books in electronic dictionaries have the similar hierarchical structure. Furthermore, the amount of data is small if an adverse reaction does not occur; however, if an adverse reaction occurs, the amount of data becomes large.

As described above, the feature of the hierarchical structure also differs between databases. Accordingly, similar to the electronic books, because the block division is performed in accordance with the feature of the hierarchical structure, the occurrence of noise when string search targets are narrowed down can be suppressed.

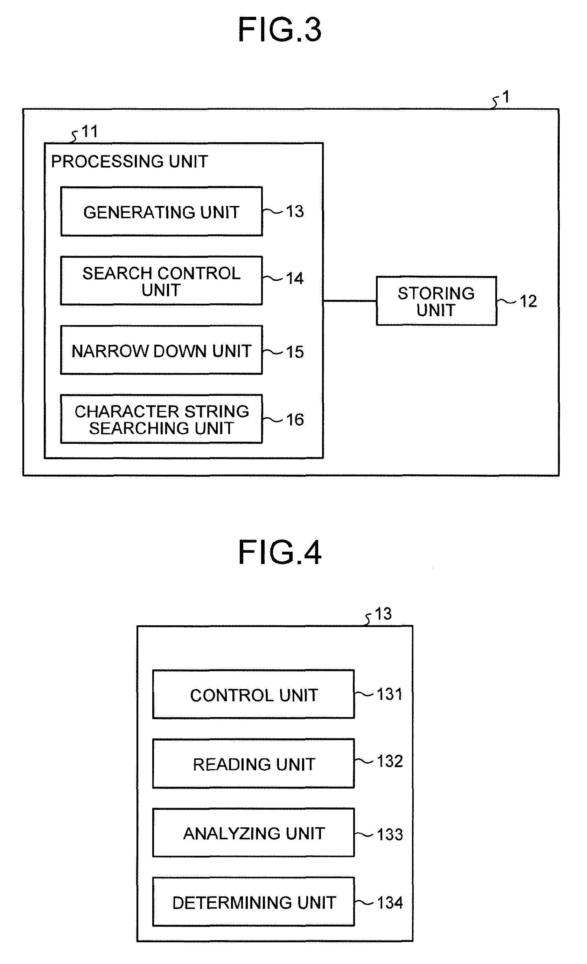

FIG. 3 is an example function block diagram of a computer 1 according to the first embodiment. The computer 1 includes a processing unit 11 and a storing unit 12. The processing unit 11 generates index information and performs a search using the generated index information. The storing unit 12 stores therein information (for example, file groups F1 to Fn, the index information, or the like targeted for a search) that is used for a process performed by the processing unit 11.

The processing unit 11 includes a generating unit 13. The generating unit 13 generates index information and stores the generated index information in the storing unit 12.

FIG. 4 is an example function block diagram of the generating unit 13. The generating unit 13 includes a control unit 131, a reading unit 132, an analyzing unit 133, and a determining unit 134. The control unit 131 sequentially specifies a file Fn from the file F1 and then allows the reading unit 132, the analyzing unit 133, and the determining unit 134 to perform a process on each of the specified files. The reading unit 132 reads, from the storing unit 12, the file Fi specified by the control unit 131 from among the file groups F1 to Fn. The analyzing unit 133 analyzes the document structure of the file for each file that has been read from the reading unit 132. The control unit 131 divides a file based on the result of analysis obtained by the analyzing unit 133. For each piece of the character information Cj in the set character information groups C1 to Cm, the determining unit 134 determines, for each block divided by the control unit 131 (if a file is not divided, a block corresponds to the file itself), whether Cj is included. If the result of the determination performed by the determining unit 134 indicates that the character information Cj is included, the control unit 131 calculates the address based on the character information Cj and the file number i of the block Bi and then stores, in the storage location indicated by the calculated address, information indicating that the character information Cj is included.

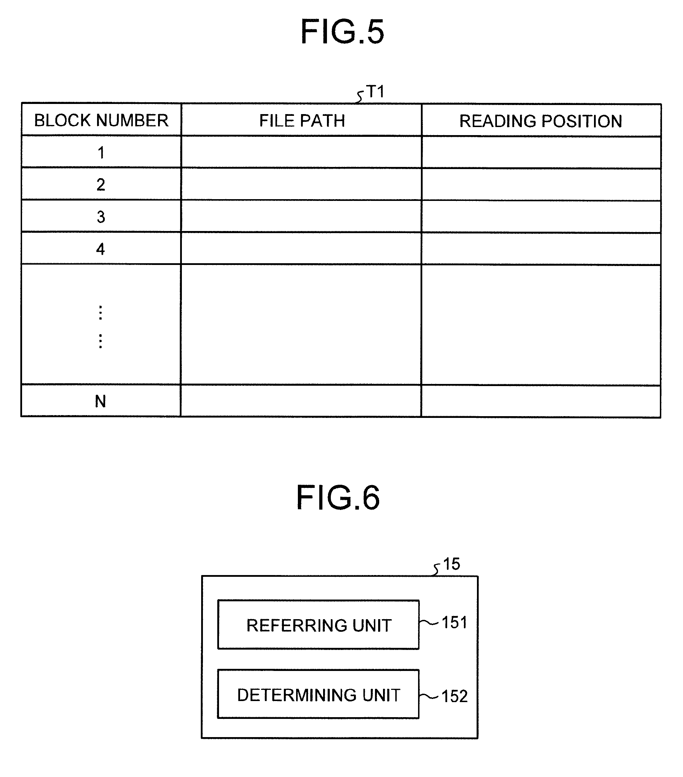

FIG. 5 is a schematic diagram illustrating an example of a table T1 that stores therein the association relation between a block number and the reading position of a block. The control unit 131 allocates a number to each of the blocks that are obtained by being divided, associates the reading position of a block with the block number, and stores the association relation in the table T1. The information stored in the table T1 is referred to by a character string searching unit 16, which will be described later.

As illustrated in FIG. 3, the processing unit 11 further includes a search control unit 14, the narrow down unit 15, and the character string searching unit 16. The search control unit 14 controls the narrow down unit 15 and the character string searching unit 16, thereby performing a search process in accordance with a search request. The narrow down unit 15 narrows down the search target files by using the index information generated by the generating unit 13. For example, the search control unit 14 extracts the character information Ca from the search string that is included in the received search request and notifies the narrow down unit 15 of the extracted character information Ca. The narrow down unit 15 notifies the search control unit 14 of the block number of the blocks from which the file that does not include the character information Ca in block groups B1 to Bp notified to the search control unit 14 is excluded. For the blocks that are narrowed down by the narrow down unit 15, the character string searching unit 16 reads data in the block from the reading position of the block stored in the table T1 and performs a string search based on the search request received by the search control unit 14.

FIG. 6 is an example function block diagram of the narrow down unit 15. The narrow down unit 15 includes a referring unit 151 and a determining unit 152. The referring unit 151 reads, from among the pieces of the index information stored in the storing unit 12, a part associated with the character information Ca that is notified by the search control unit 14. The address that indicates the part associated with the character information Ca is calculated in accordance with the character information Ca. For example, the referring unit 151 calculates the address based on the character information Ca and reads the bit string that is associated with the calculated address. Based on the bit string read by the referring unit 151, the determining unit 152 determines the blocks that do not include the character information Ca, excludes the blocks that do not include the character information Ca in the block groups B1 to Bp, and notifies the character string searching unit 16 of the block numbers.

The search control unit 14 may also extract a plurality of pieces of character information (for example, the character information Ca and the character information Cb) from a search string. Then, for each of the pieces of the character information Ca and Cb, the referring unit 151 reads a bit string that is associated with the index information. Furthermore, the determining unit 152 calculates the logical conjunction (AND) of the presence/absence information that is included in the bit string associated with the character information Ca and the presence/absence information that is included in the bit string associated with the character information Cb and then determines, based on the calculation result, whether each of the pieces of the character information Ca and Cb is present in each file. The file number of the file that is determined that one of the character information Ca and Cb is not included is not notified to the character string searching unit 16.

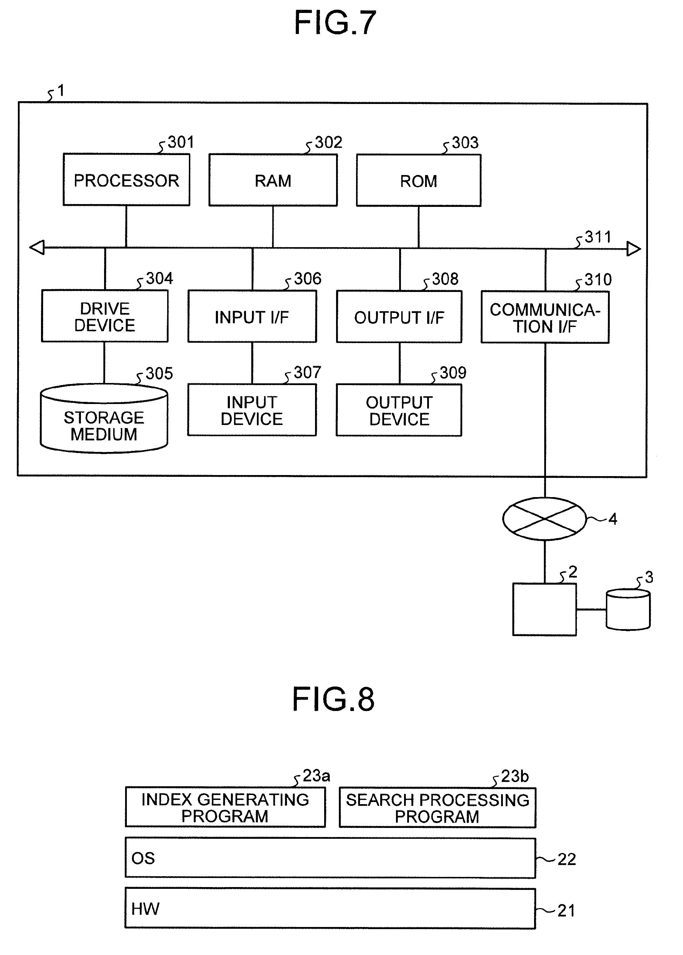

FIG. 7 is a schematic diagram illustrating an example of the hardware configuration of the computer 1. Each of the blocks illustrated in FIGS. 3, 4, and 6 is implemented by, for example, the hardware configuration illustrated in FIG. 7. The computer 1 includes, for example, a processor 301, a random access memory (RAM) 302, a read only memory (ROM) 303, a drive device 304, a storage medium 305, an input interface (I/F) 306, an input device 307, an output interface (I/F) 308, an output device 309, a communication interface (I/F) 310, and the like. Each piece of the hardware is connected via a bus 311. The communication I/F 310 controls communication via a network 4. The input interface 306 is connected to the input device 307 and transfers an input signal received from the input device 307 to the processor 301. The output interface 308 is connected to the output device 309 and allows the output device 309 to perform an output in accordance with an instruction from the processor 301.

The RAM 302 is a memory device that allows data items to be read and written. For example, a semiconductor memory, such as a static RAM (SRAM) or a dynamic RAM (DRAM) is used or, instead of a RAM, a flash memory is used. The ROM 303 also includes a programmable ROM (PROM) or the like. The drive device 304 is a device that performs at least one of the reading and writing of information recorded in the storage medium 305. The storage medium 305 stores therein information that is written by the drive device 304. The storage medium 305 is, for example, a storage medium, such as a hard disk, a compact disc (CD), a digital versatile disc (DVD), or a blue-ray disk. Furthermore, for example, the computer 1 includes the drive device 304 and the storage medium 305 as a plurality of types of storage media.

The input device 307 is a device that sends an input signal in accordance with an operation. The input signal is, for example, a key device, such as a keyboard or a button attached to the main body of the computer 1, or is a pointing device, such as a mouse or a touch panel. The output device 309 is a device that outputs information in accordance with the control by the computer 1. The output device 309 is, for example, an image output device (a display device), such as a display, or is an audio output device, such as a speaker. Furthermore, for example, an input-output device, such as a touch screen, is used as the input device 307 and the output device 309.

Furthermore, the information stored in the storage medium 305 may also be stored in the storage device 3 that is controlled by a computer 2 that is connected via the network 4. In such a case, the processor 301 acquires, via the communication interface 310, the information stored in the storage device 3, thereby the reading of a block is performed by the reading unit 132, the character string searching unit 16, or the like.

The processor 301 reads a program stored in the ROM 303 or the storage medium 305 into the RAM 302 and performs the process of the processing unit 11 in accordance with the flow of the read program. At this point, the RAM 302 is used as a work area for the processor 301. The function performed by the storing unit 12 is implemented by the ROM 303 and the storage medium 305 storing a program or the file groups F1 to Fn and is then implemented by the RAM 302 being used as the work area for the processor 301. The program read by the processor 301 will be described with reference to FIG. 8.

FIG. 8 is a schematic diagram illustrating a configuration example of the software running on the computer 1. In the computer 1, an operation system (OS) 22 that controls a hardware group 21 illustrated in FIG. 7 is operated. The processor 301 is operated in the flow in accordance with the OS 22 and then the control and the management of the hardware 21 are performed, thereby a process for an application program or middleware is executed by the hardware 21. Furthermore, in the computer 1, for example, an index generating program 23a or a search processing program 23b is read into the RAM 302 and is executed by the processor 301. Furthermore, the processor 301 executes the process based on the index generating program 23a, thereby the function of the generating unit 13 is implemented (by controlling the hardware 21 based on the OS 22). Furthermore, the processor 301 executes a process based on the search processing program 23b, thereby the function performed by each of the search control unit 14, the narrow down unit 15, and the character string searching unit 16 is implemented (by controlling the hardware 21 based on the OS 22). In FIG. 8, the index generating program 23a and the search processing program 23b are separately illustrated; however, both programs may also be integrated as a single program.

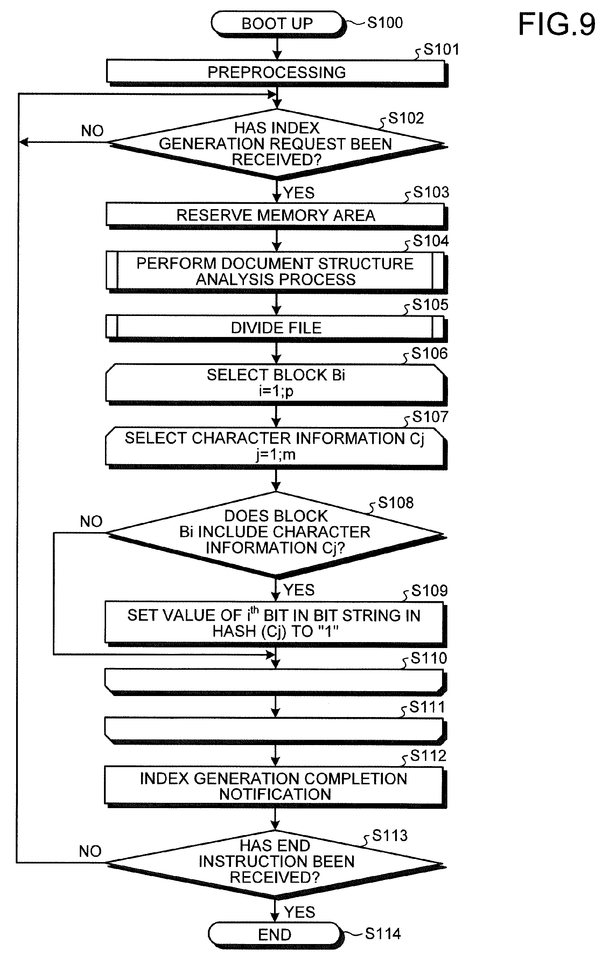

FIG. 9 is an example flowchart illustrating the flow of a process of generating an index. When the index generating program 23a is booted up (Step S100), the control unit 131 performs preprocessing (Step S101). The preprocessing at Step S101 is, for example, a process of reading the list of file paths of the search target file groups F1 to Fn or a process of reading the character information groups C1 to Cm into the storing unit 12. The control unit 131 determines whether index information is requested to be generated (Step S102) and repeatedly performs the determination until the index information is requested to be generated (No at Step S102). If the index information is requested to be generated (Yes at Step S102), the control unit 131 reserves a storage area in which the index information is stored (Step S103). For example, each of the bits in the storage area reserved at Step S103 is set to "0".

The reading unit 132 refers to the list of the file paths and reads the search target file groups F1 to Fn and the analyzing unit 133 performs a process of analyzing the document structure of each of the read file (Step S104). The control unit 131 divides a file in accordance with the analysis results of the document structure obtained by the analyzing unit 133 and stores, for the obtained divided blocks, a block number and the information that indicates the reading position of the block in the table T1 illustrated in FIG. 5 (Step S105). The processes performed at Steps S104 and S105 in detail will be described later.

The control unit 131 selects, from the table T1 illustrated in FIG. 5, a block number i and allows the reading unit 132 to read the block Bi with the selected block number i (Step S106). For example, at Step S106, the control unit 131 sequentially selects the records in the table T1 in the order of the block numbers. Then, the determining unit 134 selects a single piece of the character information Cj from among the pieces of the character information C1 to Cm (Step S107). For example, at Step S107, the determining unit 134 may also sequentially select pieces of the character information from the list of the character information C1 to Cm stored in the storing unit 12. Alternatively, by incrementing a character code within a predetermined range of the values, the character information may also be sequentially generated. The determining unit 134 determines whether the block Bi includes the character information Cj (Step S108). If it is determined that the block Bi includes the character information Cj (Yes at Step S108), the control unit 131 calculates the address based on the block number i and the character information Cj. The control unit 131 updates the bit located at the position that is associated with the calculated address to "1" (Step S109). Namely, the control unit 131 stores, in the location that is associated with the calculated address, the result of the logical addition (OR) operation of the bit at the location that is associated with the calculated address and "1". For example, it is assumed that the i^{th} bit of the bit string that is associated with the value obtained by substituting the binary code of the character information Cj in a predetermined hash function is set to "1". When the control unit 131 updates the bit, the determining unit 134 performs the process at Step S110. If the determining unit 134 determines that the block Bi does not include the character information Cj (No at Step S108), the determining unit 134 performs the process at Step S110. If unselected character information is present in the character information C1 to Cm, the determining unit 134 again performs the process at Step S107 (Step S110). If unselected character information is not present in the character information C1 to Cm, the process at Step S111 is performed. At Step S111, if an unselected file is present in the block groups B1 to Bp, the reading unit 132 again performs the process at Step S106. Furthermore, if an unselected file is not present in the block groups B1 to Bp, the process at Step S112 is performed.

The control unit 131 sends a notification indicating that a process of generating index information in file groups F1 to Fn has been completed (Step S112). At Step S112, the control unit 131 further stores, as an index file, the information in the area reserved at Step S103. After the process at Step S112 is performed, it is determined whether an end instruction has been received (Step S113). If the end instruction has been received (Yes at Step S113), the processing unit 11 ends the index generating program 23a (Step S114). If the end instruction has not been received (No at Step S113), the processing unit 11 again performs the process at Step S102.

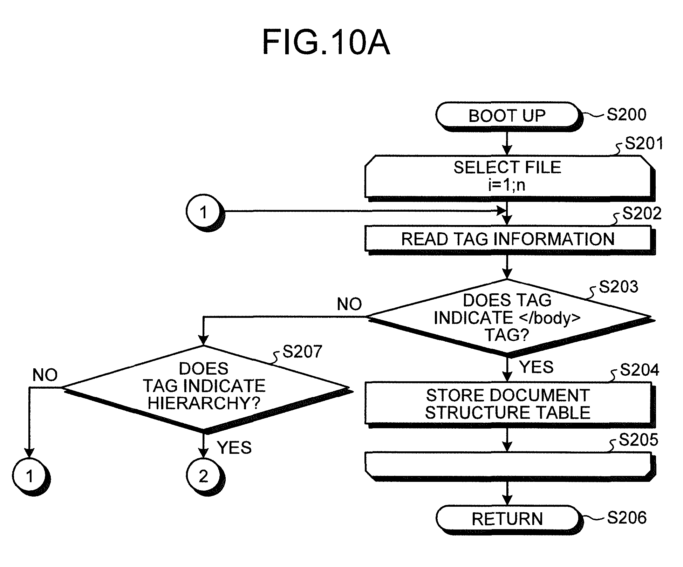

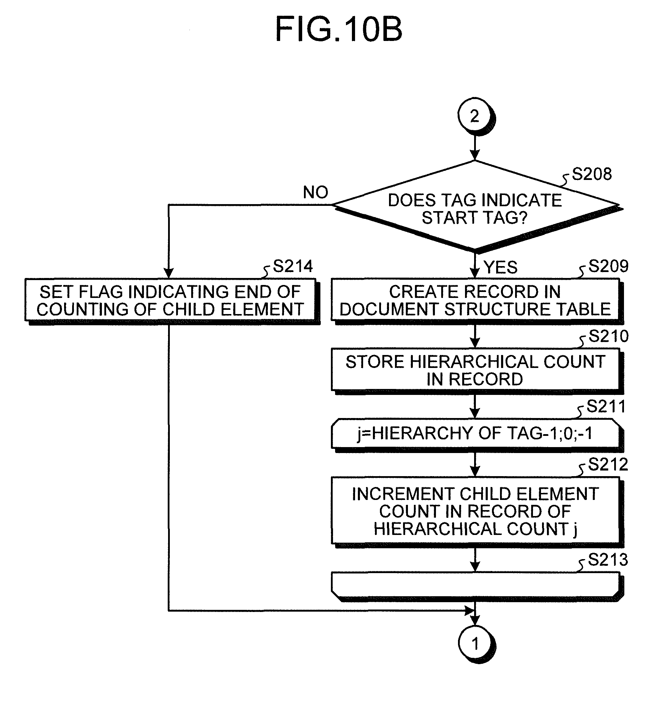

Then, a description will be given of a document structure analysis process performed at Step S104. FIGS. 10A and 10B are example flowcharts each illustrating the flow of a document structure analysis process. In the document structure analysis process, for each file, the number of child elements included in each of the document elements in a file is counted.

When the document structure analysis process is performed (Step S200), the control unit 131 sequentially selects files starting from the files F1 to Fn and the reading unit 132 reads the selected file Fi (Step S201). The analyzing unit 133 sequentially reads tag information from the file Fi (Step S202). The analyzing unit 133 determines whether the tag information that has been read at Step S202 is the tag </body> (Step S203). If the tag information that has been read at Step S202 is the tag </body> (Yes at Step S203), the analyzing unit 133 stores the document structure table that is created for the file Fi in the storing unit 12 (Step S204). If a file that has not been subjected to the document structure analysis process is present, the analyzing unit 133 performs the process at Step S201 and, if a file that has not been subjected to the document structure analysis process is not present, the analyzing unit 133 ends the document structure analysis process (Step S206) and then performs the process at Step S105 (Step S205).

If the tag information read at Step S202 is not the tag </body> (No Step S203), it is determined whether the tag information read at Step S202 is the tag information that indicates the hierarchy of the document structure (Step S207). The tag information that indicates the hierarchy of the document structure means, for example, <body>, <h1>, <h2>, ..., and the like. If the tag information read at Step S202 is not the tag information that indicates the hierarchy (No at Step S207), the process at Step S202 is again performed.

If the tag information read at Step S202 is the tag information that indicates the hierarchy (Yes at Step S207), the analyzing unit 133 determines whether the read tag information is the tag information that indicates a start (Step S208). The tag information that indicates a start is, in the tag <body>, for example, <body>, whereas </body> indicates an end. For example, for <h1>, <h1> indicates a start and </h1> indicates an end. If the tag information read at Step S202 is not the tag that indicates a start (No Step S208), the analyzing unit 133 sets an end flag for the count of the child elements, which will be described later (Step S214).

If the tag information read at Step S202 is the tag that indicates a start (Yes Step S208), the analyzing unit 133 creates a record in a document structure table T2 (Step S209). When each of the files is stored for the first time, the analyzing unit 133 reserves a storage area in the document structure table T2. At Step S209, the analyzing unit 133 creates a new tag ID and stores the created tag ID in the tag ID item in the document structure table. For example, the tag ID is created by incrementing the value of the ID that was immediately previously created.

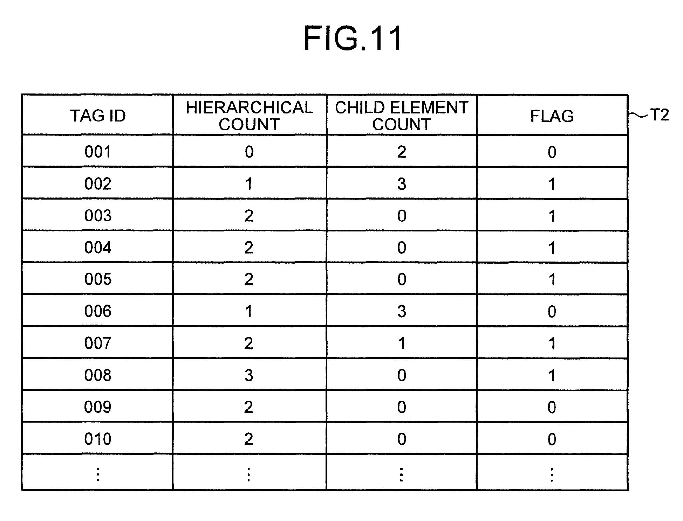

FIG. 11 is a schematic diagram illustrating a document structure table T2. The document structure table T2 includes the item of the tag ID, the hierarchical count, the child element count, and the flag. In the item of the tag ID, the ID that is allocated to the tag information included in a document is stored. In the hierarchical count, the number of hierarchies indicated by the tag information is stored. In the child element count, the number of child elements held by the tag information is stored. Furthermore, the flag is a flag that indicates whether the count of the number of the child elements related to the tag information stored in the document structure table has been completed. The document structure table T2 is created for each of the files F1 to Fn.

When the analyzing unit 133 creates a record in the document structure table T2, the analyzing unit 133 stores, in the item of the hierarchical count of the created record, the hierarchical count indicated by the tag information that has been read (Step S210). If the read tag information is, for example, <body>, the hierarchical count is 0; if the read tag information is <h1>, the hierarchical count is 1, if the read tag information is <h2>, the hierarchical count is 2; and, if the read tag information is < h3>, the hierarchical count is 3. Then, the analyzing unit 133 counts the hierarchical counts (Steps S211 to S213). The analyzing unit 133 uses the value obtained by subtracting 1 from the hierarchical count indicated by the read tag information as j and then performs the process at Step S212. After performing the process at Step S212, the analyzing unit 133 uses the value obtained by subtracting 1 from j as j and then repeatedly performs the process at Step S212. This process is repeatedly performed until j becomes 0. At Step S212, among the records in the document structure table T2, the analyzing unit 133 searches the records created at Step S209 in the descending direction of the tag ID for the record with the hierarchical count of j. The analyzing unit 133 creates a record by incrementing the value for the extracted record to be stored in the item of the child element count. When the processed at Steps S211 to S213 have been ended, the analyzing unit 133 again performs the process at Step S202.

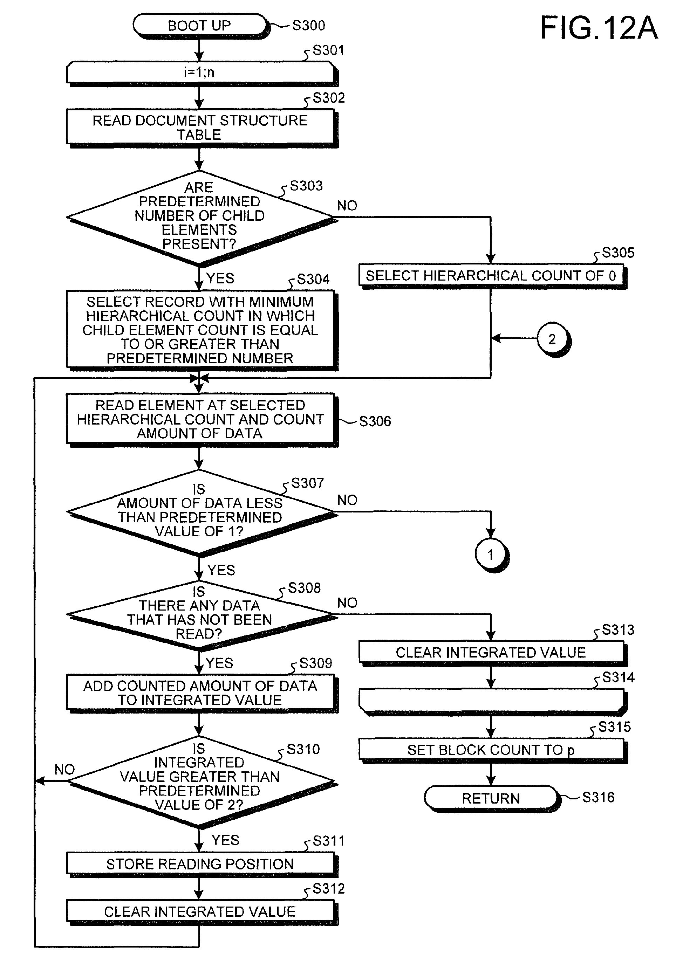

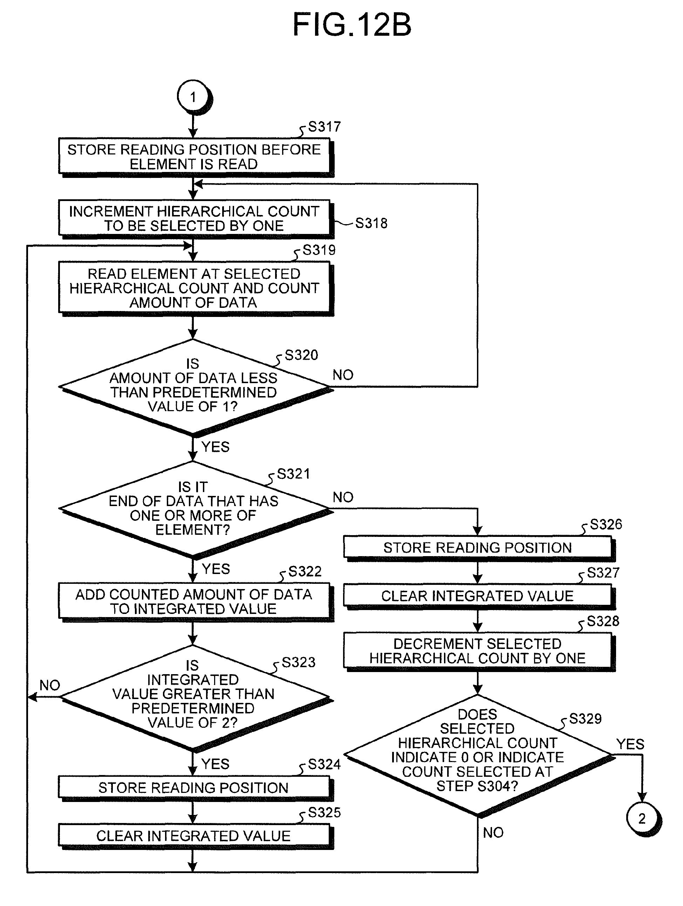

In the following, a file dividing process performed at Step S105 will be described. FIGS. 12A and FIG. 12B are example flowcharts each illustrating the flow of a file dividing process. In the file dividing process, the determining unit 134 determines whether data read from each of the files exceeds a predetermined data size.

When the file dividing process is started (Step S300), the control unit 131 selects one of the files F1 to Fn (Step S301). Namely, the control unit 131 selects one of the numbers 1 to n. The control unit 131 reads the document structure table T2 associated with the file selected at Step S301 (Step S302). Then, the determining unit 134 extracts a record in which the child element count is equal to or greater than a predetermined number in the read document structure table T2 (Step S303). If a record in which the child element count is equal to or greater than a predetermined number in the read document structure table T2 is present (Yes at Step S303), the determining unit 134 selects the hierarchical count in the record with the smallest hierarchical count from among the record in which the child element count is equal to or greater than the predetermined number (Step S304). Furthermore, if no child element with the predetermined number or more is present (No Step S303), the determining unit 134 selects 0 for the hierarchical count (Step S305).

Then, the determining unit 134 reads the element that indicates the selected hierarchical count from the file Fi. Furthermore, the determining unit 134 counts the amount of data on the read element (Step S306). For example, the determining unit 134 sequentially extracts, from the document structure table T2, the record in which the selected hierarchical count is stored in the item of the hierarchical count. At Step S306, the determining unit 134 reads, from the tag information indicated by the extracted record in the file Fi, data until the end tag that is associated with the tag information.

Then, the determining unit 134 determines whether the amount of data that has been read at Step S306 is equal to or less than a first predetermined value (Step S307). If the amount of data that has been read at Step S306 is equal to or less than the first predetermined value (Yes at Step S307), the determining unit 134 determines whether data that has not been read is present in the file Fi (Step S308).

If data that has not been read is present in the file Fi (Yes at Step S308), the determining unit 134 adds the amount of data counted at Step S306 to the integrated value S (Step S309). The integrated value is zero in each file. The determining unit 134 determines whether the integrated value is equal to or greater than a second predetermined value (Step S310). If the integrated value is not greater than the second predetermined value (No at Step S310), the determining unit 134 again performs the process at Step S306. If the integrated value is greater than the second predetermined value (Yes at Step S310), the determining unit 134 stores the reading end position of the data that is read at Step S306 in the table T1 illustrated in FIG. 5 (Step S311). For example, when the data is read starting from the file Fi, if the integrated value exceeds the second predetermined value for the first time, the read position is stored in the table T1 as the read position for the second block of the file Fi. Furthermore, the determining unit 134 clears the integrated value (Step S312). Furthermore, if the determining unit 134 ends the process at Step S312, the determining unit 134 again performs the process at Step S306.

The second predetermined value used here is, for example, a value smaller than the first predetermined value. As described above, it is conceivable that narrow down noise is less likely to be generated if the block division can be performed on the elements at the higher hierarchy levels; therefore, even if the data size is slightly large, there is a merit in block division performed on the elements at a higher hierarchy level.

If the amount of data read at Step S306 is not smaller than the first predetermined value (No at Step S307), the determining unit 134 stores, in the table T1, the reading position located at the just previous read position of the data performed at Step S306 (Step S317). Furthermore, the determining unit 134 increments the hierarchical count that is used to determine a unit of data to be read (Step S318). Consequently, the determining unit 134 can divide the file into blocks in smaller units. Then, based on the hierarchical count determined at Step S318, the determining unit 134 reads the data from the file Fi and then counts the amount of data (Step S319). Furthermore, a determining unit 317 determines whether the amount of data read at Step S319 is smaller than the first predetermined value (Step S320). If the amount of data read at Step S319 is not smaller than the first predetermined value (No at Step S320), the determining unit 134 again performs the process at Step S318.

If the amount of data read at Step S319 is smaller than the first predetermined value (Yes at Step S320), the determining unit 134 determines whether all of the pieces of the data, such as data read at immediate previous Step S306, that is in the hierarchy just higher than the hierarchy indicated by the hierarchical count (hierarchical count-1) that is selected at Step S318 have already been read at the hierarchical count selected at Step S318 (Step S321). If it is determined that all of the pieces of data have been read at Step S321 (Yes at Step S321), the determining unit 134 performs the process at Step S309 (Step S322). The determining unit 134 performs the same process as that performed at Step S310 (Step S323). If the determination result indicates Yes at Step S323 (Yes at Step S323), the determining unit 134 performs the same process as that performed at Steps S311 and S312 (Steps S324 and S325) and again performs the process at Step S319. If the determination result indicates No at Step S323 (No at Step S323), the determining unit 134 performs the process at Step S319.

If it is determined not all pieces of the data has been read at Step S321 (No at Step S321), the determining unit 134 performs the same process at Steps S311 and S312 (Steps S326 and S327). Then, the determining unit 134 decrements the hierarchical count to be selected (Step S328). The determining unit 134 determines whether the selected hierarchical count is 0 or the selected hierarchical count is the hierarchical count of the hierarchy that has been selected at Step S304 (Step S329). At the determination performed at Step S329, if the selected hierarchical count is 0 or the selected hierarchical count is the hierarchical count of the hierarchy that has been selected at Step S304 (Yes at Step S329), the determining unit 134 again performs the process at Step S306. At the determination performed at Step S329, if no conditions are satisfied (No at Step S329), the determining unit 134 again performs the process at Step S319.

If data that has not been read is not present in the file Fi (No at Step S308), the determining unit 134 clears the integrated value (Step S313). If the file Fi is not the file Fn, the generating unit 13 again performs the process starting at Step S301 (Step S314). If the file Fi is the file Fn, the generating unit 13 sets the total number of the blocks obtained by dividing the files F1 to Fn to p (Step S315). Furthermore, the generating unit 13 performs the process at Step S106 (Step S316).

For example, if the determination result indicates No at Step S307 or if the determination result indicates Yes at Step S310, the read position may also be returned to the read position in which an immediate previous period has been read. This avoids the boundary of the divided block from being in the middle of a sentence. Furthermore, for example, the read position may also be returned to the position of the immediate previous line feed.

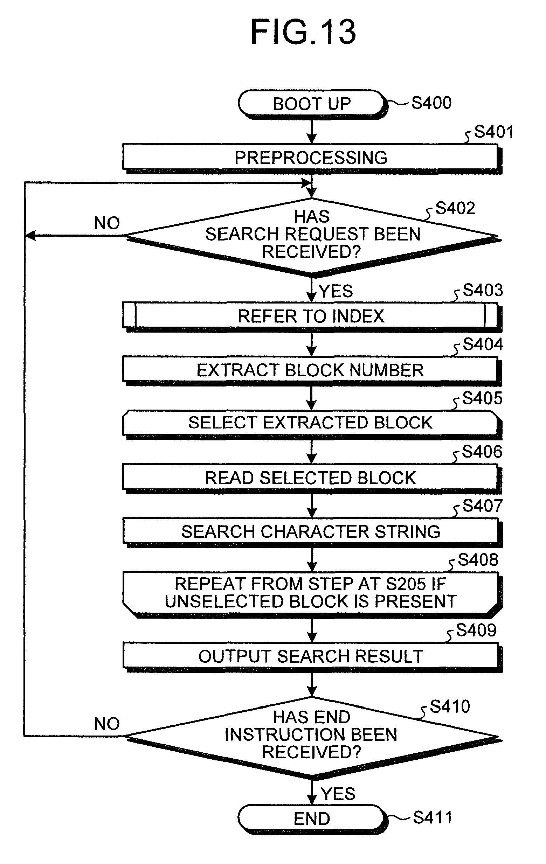

FIG. 13 is an example flowchart illustrating the flow of a full text search process. When a search processing program 23 is booted up (Step S400), the search control unit 14 performs the preprocessing (Step S401). The preprocessing performed at Step S401 is the process of reading the table T1 illustrated in FIG. 5 or the process of the index information. The search control unit 14 determines whether a search request is received (Step S402) and repeats the determination performed at Step S402 until a search request is received (No at Step S402). If a search request has been received (Yes at Step S402), an index referring process is performed (Step S403).

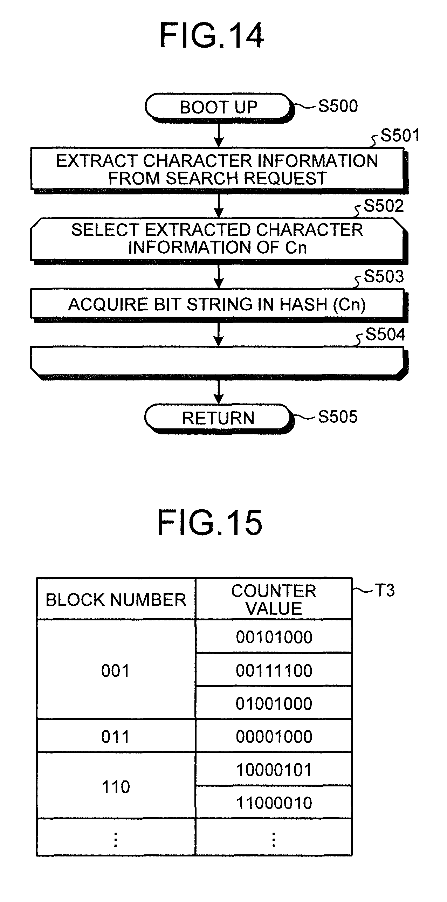

FIG. 14 is an example flowchart illustrating the flow of an index referring process. If the process at Step S403 has been performed (Step S500), the search control unit 14 fetches the search string included in the search request and extracts the pieces of the character information Ca, Cb, ..., from among the pieces of the character information C1 to Cm, that are included in the search string (Step S501).

If the search control unit 14 extracts the pieces of the character information Ca, Cb, ..., the narrow down unit 15 determines whether, each of the block groups B1 to Bp does not include any of the extracted character information Ca, Cb, ..., or the like. Specifically, first, the narrow down unit 15 selects one of the extracted pieces of the character information (Step S502). The referring unit 151 calculates the address based on the selected character information and then reads the information that is stored in the location indicated by the calculated address (Step S503). At Step S503, the referring unit 151 calculates the address by using the same calculation performed at Step S109. At this point, for example, the referring unit 151 reads a bit string that is associated with the value that is obtained by substituting the binary code of the selected character information in a predetermined hash function. If unselected character information is present in the extracted character information Ca, Cb, ..., the narrow down unit 15 again performs the process at Step S502. If unselected character information is not present in the extracted character information Ca, Cb, ..., the narrow down unit 15 ends the index referring process (Steps S504 and S505).

If the index referring process has been ended, the narrow down unit 15 extracts the block number of the search target block (Step S404). At Step S404, for example, the determining unit 152 calculates, for each of the pieces of the character information Ca, Cb, ..., the logical conjunction (AND) of the bit strings that have been read by the referring unit 151. The determining unit 152 creates a number that indicates the order of the bit of "1" in the calculated bit string. For example, if the x^{th} bit and the y^{th} bit indicate "1" in the calculated bit string, the determining unit 152 creates x and y.

The search control unit 14 selects a number i that indicates one of the numbers x and y created by the determining unit 152 (Step S405). The character string searching unit 16 reads the block Bi with the block number of the selected number i (Step S406). The character string searching unit 16 reads a block from the reading position, in the table T1 illustrated in FIG. 5, that is associated with the block number i. The character string searching unit 16 searches the read block Bi for the search string (Step S407). For example, if the character string searching unit 16 detects, in the block Bi, the character string that matches the search string, the character string searching unit 16 generates information that indicates the location of the matched character string in the block Bi, associates the information with the block number i in the block Bi, and stores the association relation in the storing unit 12 (see FIG. 15). For example, a counter that counts the amount of data that has been checked against the search string is previously provided and then the value of the counter at the time of the match of the character strings is used as the information that indicates the location in the file.

FIG. 15 is a schematic diagram illustrating an example of a table that stores therein search results. The table T2 illustrated in FIG. 15 includes therein records each of which indicates the location in which a character string that matches a search string is present. The location in which a character string that matches a search string is present is indicated by, for example, a block number in which a character string is included and a value of the counter that is incremented every time the character information in each block is read. The value of the counter is read when, for example, a match is detected.

After the process at Step S407 has been performed, if an unselected number is present in the numbers x, y, ..., created by the determining unit 152, the search control unit 14 performs the process at Step S405 (Step S408). If an unselected number is not present in the numbers x, y, ..., created by the determining unit 152, the search control unit 14 performs the process at Step S409.

The search control unit 14 performs an output process of the search result (Step S409). For example, the search control unit 14 performs a process of extracting a character string in the vicinity of the location indicated by the information that is stored in the table T2 illustrated in FIG. 15 when the process is performed at Step S407 and performs a process of displaying the extracted character string on the display device together with the file name of the file that is associated with the block number.

After the process at Step S409 has been performed, the processing unit 11 determines whether an end instruction has been received (Step S410). If the end instruction has not been received (No at Step S410), the search control unit 14 performs the process at Step S402.

If the end instruction has been received (Yes at Step S410), the processing unit 11 ends a search processing program 22b (Step S411).

### [Explanation of Reference]

- 1: computer
- 2: computer
- 3: storage device
- 4: network
- 11: processing unit
- 12: storing unit
- 13: generating unit
- 14: search control unit
- 15: narrow down unit
- 16: character string searching unit
- 131: control unit
- 132: reading unit
- 133: analyzing unit
- 134: determining unit
- 151: referring unit
- 152: determining unit

## Claims

1. A generating program which causes a computer to execute a process comprising:
changing, in accordance with whether a document element that has a predetermined number or more of child elements is present in a document file, control of determining whether data in the document file is to be included in which of a plurality of blocks by changing the control between the control performed for each document element in a hierarchy of the child elements and the control performed for each document element in the hierarchy of the document element or in the hierarchy higher than the hierarchy of the document element;
dividing, by using the control in accordance with the change at the changing, the document file into the plurality of blocks; and
generating, for each block obtained by being divided at the dividing, index information indicating whether each of the blocks includes predetermined character information.

2. The generating program according to claim 1, wherein the process further includes performing, when data size of the document element or the data size of the document element in the hierarchy higher than the hierarchy of the document element is greater than a predetermined value, the control for each document element in the hierarchy just lower than the hierarchy of the document element.

3. The generating program according to claim 1 or 2, wherein each of the document elements included in the document file is a character information group included in tags in the document file in a range from a start tag to an end tag.

4. A generating method comprising:
changing, performed by a computer in accordance with whether a document element that has a predetermined number or more of child elements is present in a document file, control of determining whether data in the document file is to be included in which of a plurality of blocks by changing the control between the control performed for each document element in a hierarchy of the child elements and the control performed for each document element in the hierarchy of the document element or in the hierarchy higher than the hierarchy of the document element;
dividing, performed by the computer by using the control in accordance with the change at the changing, the document file into the plurality of blocks; and
generating, performed by the computer for each block obtained by being divided at the dividing, index information indicating whether each of the blocks includes predetermined character information.

5. A generating apparatus comprising:
a dividing unit configured to change, in accordance with whether a document element that has a predetermined number or more of child elements is present in a document file, control of determining whether data in the document file is to be included in which of a plurality of blocks by changing the control between the control performed for each document element in a hierarchy of the child elements and the control performed for each document element in the hierarchy of the document element or in the hierarchy higher than the hierarchy of the document element and that divides, by using the control in accordance with the change, the document file into the plurality of blocks; and
a generating unit configured to generate, for each block obtained by being divided, index information indicating whether each of the blocks includes predetermined character information.

6. A search program which causes a computer to execute a process comprising:
referring to, when a search string is received, based on character information included in the search string, index information indicating, in an associated manner, whether each block includes the character information, each of the blocks being obtained by being divided by changing, in accordance with whether a document element that has a predetermined number or more of child elements is present in a document file, control of determining whether data in the document file is to be included in which of the blocks by changing the control between the control performed for each document element in a hierarchy of the child elements and the control performed for each document element in the hierarchy of the document element or in the hierarchy higher than the hierarchy of the document element;
specifying, by referring to the index information at the referring, the block that indicates that the character information is included in the index information; and
performing a string search on the search string with respect to the specified block.

7. A search method comprising:
referring to, performed by a computer when a search string is received, based on character information included in the search string, index information indicating, in an associated manner, whether each block includes the character information, each of the blocks being obtained by being divided by changing, in accordance with whether a document element that has a predetermined number or more of child elements is present in a document file, control of determining whether data in the document file is to be included in which of the blocks by changing the control between the control performed for each document element in a hierarchy of the child elements and the control performed for each document element in the hierarchy of the document element or in the hierarchy higher than the hierarchy of the document element;
specifying, performed by the computer by referring to the index information at the referring, the block that indicates that the character information is included in the index information; and
performing, by the computer, a string search on the search string with respect to the specified block.

8. A search apparatus comprising:
a receiving unit configured to receive a search string;
a storing unit configured to store therein, based on character information included in the search string received by the receiving unit, index information indicating, in an associated manner, whether each block includes the character information, each of the blocks being obtained by being divided by changing, in accordance with whether a document element that has a predetermined number or more of child elements is present in a document file, control of determining whether data in the document file is to be included in which of the blocks by changing the control between the control performed for each document element in a hierarchy of the child elements and the control performed for each document element in the hierarchy of the document element or in the hierarchy higher than the hierarchy of the document element;
a narrow down unit configured to specify, by referring to the index information stored in the storing unit, the block that indicates that the character information is included in the index information; and
a searching unit configured to perform a string search on the search string with respect to the specified block.
